# EUROPÄISCHE PATENTSCHRIFT

(11) **EP 1 544 500 B1**
(45) Veröffentlichungstag und Bekanntmachung des Hinweises auf die Patenterteilung: **07.03.2007**
(21) Anmeldenummer: 04018533.2
(22) Anmeldetag: 05.08.2004
(51) Int. Cl.: F16F 13/10

(54) **Hydrolager**
Hydraulic support
Support hydraulique

(30) Priorität: 17.12.2003 DE 10359457
(43) Veröffentlichungstag der Anmeldung: 22.06.2005
(73) Patentinhaber: Carl Freudenberg KG, 69469 Weinheim (DE)
(72) Erfinder: Winkler, Gerold, 69488 Birkenau (DE)

(56) Entgegenhaltungen:
- EP-A- 0 939 243
- DE-A- 3 629 860
- FR-A- 2 555 273
- US-A- 4 850 578
- US-A- 4 880 215

## Beschreibung

### Technisches Gebiet

Die Erfindung betrifft ein Hydrolager, umfassend ein Traglager und ein Auflager, die durch eine Tragfeder aus gummielastischem Werkstoff miteinander verbunden sind und eine Arbeits- und eine Ausgleichskammer begrenzen, die mit Dämpfungsflüssigkeit gefüllt sind, wobei die Arbeits- und die Ausgleichskammer auf ihren einander zugewandten Seiten durch eine gemeinsame Trennwand voneinander getrennt und durch ein erster Tilgerkanal strömungsleitend miteinander verbunden sind. Ein solches Hydrolager ist aus der EP-A-0 939 243 bekannt.

### Stand der Technik

Derartige Hydrolager sind allgemein bekannt und gelangen beispielsweise zwischen einer Verbrennungskraftmaschine und dem Chassis eines Kraftfahrzeugs zur Anwendung. Der erste Tilgerkanal kann schaltbar ausgebildet sein. In einem solchen Fall wird der erste Tilgerkanal zum Tilgen von Leerlaufschwingungen der Verbrennungskraftmaschine geöffnet. Läuft die Verbrennungskraftmaschine demgegenüber nicht mehr im Leerlauf wird der erste Tilgerkanal geschlossen und die Schwingungsdämpfung- /isolierung erfolgt ebenfalls in an sich bekannter Weise. Gedämpft werden Schwingungen dadurch, dass die Dämpfungsflüssigkeit zwischen der Arbeits- und der Ausgleichskammer durch einen Dämpfungskanal hin- und her verlagert wird (Dämpfung tieffrequenter, großamplitudiger Schwingungen, wie sie beispielsweise beim Überfahren einer Bordsteinkante entstehen). Die Isolierung höher frequenter, kleinamplitudiger Schwingungen, die dadurch entstehen, dass ein Motor durch die Verbrennung und die Ungleichförmigkeit des Kurbeltriebs Eigenbewegungen erzeugt, werden dadurch isoliert, dass eine Membran aus gummielastischem Werkstoff phasenverschoben, idealerweise gleichphasig zu den eingeleiteten Schwingungen zwischen Anschlägen, beispielsweise den Anschlägen eines Düsenkäfigs, hin- und herbewegt wird.

Aus der DE 36 29 860 A1 ist ein Hydrolager bekannt, umfassend ein Traglager und ein Auflager, die durch eine Tragfeder aus gummielastischem Werkstoff miteinander verbunden sind und eine Arbeits- und eine Ausgleichskammer begrenzen, die mit Dämpfungsflüssigkeit gefüllt sind, wobei die Arbeits- und die Ausgleichskammer auf ihren einander zugewandten Seiten durch eine gemeinsame Trennwand voneinander getrennt sind. In der Trennwand ist eine Drosselöffnung angeordnet, die die Arbeits- und die Ausgleichskammer strömungsleitend miteinander verbindet. Das Traglager weist auf seiner der Arbeitskammer zugewandten Innenseite eine Ausnehmung auf, die als Luftspeicherkammer ausgebildet ist, die gegen die Arbeitskammer mit einem Drosselelement mit einer zentralen Drosselöffnung abgeschlossen ist Dadurch soll die Aufgabe gelöst werden, dass sich in der Luftspeicherkammer mit der kleinkalibrigen Drosselöffnung montagebedingte Luftblasen sammeln können, die dadurch aus der eigentlichen Arbeitskammer entfernt sind und die Funktionsfähigkeit der Arbeits- und Ausgleichskammer nicht mehr beeinflussen. Die Luftspeicherkammer weist ein wesentlich größeres Volumen auf, als die Drosselöffnung in der Trennwand, die als Dämpfungseinrichtung ausgebildet ist.

Ein weiteres Hydrolager ist aus der US 4 850 578 bekannt. Das Hydrolager umfasst ein Traglager und ein Auflager, die durch eine Tragfeder aus gummielastischem Werkstoff miteinander verbunden sind und eine Arbeits- und eine Ausgleichskammer begrenzen, die mit Dämpfungsflüssigkeit begrenzt sind, wobei die Arbeits- und die Ausgleichskammer auf ihren einander zugewandten Seiten durch eine gemeinsame Trennwand voneinander getrennt sind. Die Trennwand besteht aus einem Düsenkäfig, umfassend eine obere perforierte Trennwand und eine untere, perforierte Trennwand, wobei zwischen der oberen Trennwand und der unteren Trennwand eine Membran zur Isolierung höher frequenter Schwingungen schwingfähig angeordnet ist.
In der Arbeitskammer ist ein Arbeitsteil angeordnet, das aus einem ringförmigen flachen Bund besteht, wobei das Arbeitsteil in seinem Inneren eine Vertiefung aufweist, wobei die Vertiefung durch eine Gummiringscheibe und ein zentrisch angeordnetes metallisches Ringglied verschlossen ist. Das Ringglied weist eine Durchgangsbohrung auf. Die Schwingung, mit der das Fluid in der Durchgangsbohrung in Resonanz kommt, soll durch eine solche Ausgestaltung wirksam isoliert werden.
Das vorbekannte Hydrolager weist keinen zweiten Tilgerkanal auf.

### Darstellung der Erfindung

Der Erfindung liegt die Aufgabe zugrunde, ein Hydrolager der vorbekannten Art derart weiterzuentwickeln, dass Schwingungen höherer Ordnung, insbesondere vierter (Vierzylinder) oder sechster Ordnung (Sechszylinder) im Leerlauf besser getilgt werden können. Es soll eine Absenkung der dynamischen Federrate im Bereich der Frequenzen vierter oder sechster Ordnung erzielt werden.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Zur Lösung der Aufgabe ist ein Hydrolager vorgesehen, umfassend ein Traglager und ein Auflager, die durch eine Tragfeder aus gummielastischem Werkstoff miteinander verbunden sind und eine Arbeits- und eine Ausgleichskammer begrenzen, die mit Dämpfungsflüssigkeit gefüllt sind, wobei die Arbeits- und die Ausgleichskammer auf ihren einander zugewandten Seiten durch eine gemeinsame Trennwand voneinander getrennt und durch einen ersten Tilgerkanal strömungsleitend miteinander verbunden sind, wobei dem ersten Tilgerkanal ein zweiter Tilgerkanal in einer funktionstechnischen Parallelschaltung zugeordnet ist, wobei der erste und der zweite Tilgerkanal koaxial, mit axialem Abstand zueinander benachbart angeordnet sind und wobei das Volumen des ersten Tilgerkanals größer als das Volumen des zweiten Tilgerkanals ist. Die genannten Tilgerkanäle sind jeweils als Tilgersystem zu verstehen. Die beiden Tilgerkanäle haben eine unterschiedliche Frequenzabstimmung, so dass Massenkräfte der zweiten und vierten Ordnung (bei 4-Zylinder) oder dritter und sechster Ordnung (bei 6-Zylinder) getilgt werden.

Unter der sogenannten Schwingungsordnung versteht man eine Schwingungsanregung, die entsprechend einer vielzahligen Anzahl von Anregungen in Folge von Massenkräften und/oder Verbrennungsvorgängen während einer Kurbelwellenumdrehung auftritt.

Der vorteilhafte Effekt, den der zweite Tilgerkanal bewirkt, der dem ersten Tilgerkanal funktionstechnisch parallelgeschaltet ist, beruht darauf, dass das erfindungsgemäße Hydrolager durch die Parallelschaltung in der Lage ist, gleichzeitig Schwingungen zweiter und vierter Ordnung oder gleichzeitig Schwingungen dritter und sechster Ordnung zu tilgen.

Der erste und der zweite Tilgerkanal sind koaxial, mit axialem Abstand zueinander benachbart angeordnet. Wenn beide Tilgerkanäle funktionstechnisch parallel geschaltet sind, wird durch die koaxiale Anordnung der Tilgerkanäle bewirkt, dass die Volumina, die von den beiden Tilgerkanäle jeweils begrenzt werden, mit geringstmöglichem Strömungswiderstand gleichphasig zu den eingeleiteten Schwingungen hin- und her schwingen können. Die möglichst widerstandsarme Verlagerung der Volumina ist erforderlich, um eine unerwünschte dynamische Verhärtung des Lagers in diesem Betriebszustand zu vermeiden.
Die koaxiale Anordnung der beiden Tilgerkanäle zueinander, mit axialem Abstand benachbart, ist in strömungstechnischer Hinsicht besonders günstig, um eine Absenkung der dynamischen Federraten im Bereich der Schwingungen vierter oder sechster Ordnung zu erhalten.

Das Volumen des ersten Tilgerkanals ist größer als das Volumen des zweiten Tilgerkanals. Dadurch wird sichergestellt, dass bei Leerlaufdrehzahl der Verbrennungskraftmaschine, offenem ersten Tilgerkanal und offenem zweiten Tilgerkanal das vergleichsweise kleinere Volumen des zweiten Tilgerkanals mit nur geringem Strömungwiderstand auch durch die Öffnung des ersten Tilgerkanals hindurch schwingen kann.
Wäre es demgegenüber so, dass das Volumen des zweiten Tilgerkanals größer wäre, als das Volumen des ersten Tilgerkanals, müsste sich bei offenem ersten Tilgerkanal und offenem zweiten Tilgerkanal das vergleichsweise große Flüssigkeitsvolumen des zweiten Tilgerkanals durch einen vergleichsweise kleinen ersten Tilgerkanal hindurchpressen, was zu einer unerwünscht hohen Reibung und einem unerwünschten Dämpfungseffekt führen würde. Die Gebrauchseigenschaften des Hydrolagers wären dadurch schlechter.

Generell können der erste und / oder der zweite Tilgerkanal schaltbar ausgebildet sein. Schaltbar ausgebildet bedeutet in diesem Zusammenhang, dass die Tilgerkanäle in Offen- oder Geschlossenstellung bringbar sind, abhängig vom jeweiligen Betriebszustand des abgestützten Aggregats, beispielsweise einer Verbrennungskraftmaschine.
Dadurch kann die Funktion des Hydrolagers sehr variabel an den jeweiligen Betriebszustand des abgestützten Aggregats angepasst werden.
Für das Beispiel einer Verbrennungskraftmaschine bedeutet dies:

Läuft zum Beispiel ein Reihen-Sechszylinder-Motor mit einer bestimmten Drehzahl, wird in der dritten Ordnung dreimal pro Umdrehung eine Schwingungsanregung erzeugt und in der sechsten Ordnung sechsmal. Die so entstehenden Anregungsfrequenzen liegen so weit auseinander, das nur ein schwingendes System, wie beispielsweise aus dem Stand der Technik bekannt, die Tilgung für beide Anregungen nicht übernehmen kann. Man muß also sich dann für eine der beiden Anregungsfrequenzen bei der Auslegung entscheiden.

Die erfindungsgemäße Ausführung mit zwei Tilgerkanälen/Tilgersystemen, erlaubt demgegenüber, beide Frequenzen gleichzeitig zu tilgen und schwingungsbedingte Vibrationen dadurch zu reduzieren.

Überlässt man den Feder-Fluidmasse-Systemen der Tilgerkanäle, die beiden Schwingungen in Folge des Resonanzverhaltens zu tilgen, wird immer der gerade nicht tilgende Kanal mit seiner Membran Fluid aufnehmen und die Wirkung des arbeitenden Tilgersystems abschwächen. Durch die Schaltmöglichkeit kann diese unerwünschte Nachgiebigkeit im Lager ausgeschaltet werden. Daher erhöht sich die Wirksamkeit des gerade arbeitenden Tilgersystems.

Die Auslegung der Schaltung hängt im Wesentlichen von der drehzahlabhängig dominierenden Ordnung ab. Die Wirksamkeit der Tilgersysteme nimmt beispielsweise in folgender Reihenfolge zu: am wenigstens wirksam tilgen zwei passive Systeme. Wird ein System schaltbar gemacht, erhöht sich bei der Frequenz des anderen Systems die Tilgung.

Im Rahmen der vorliegenden Erfindung ist es beispielsweise vorgesehen, dass der erste Tilgerkanal schaltbar und der zweite Tilgerkanal nicht-schaltbar, das heißt passiv ausgebildet ist. Hierbei ist von Vorteil, dass ein solches Hydrolager einen ausgezeichneten Kompromiß zwischen vergleichsweise einfachem kostengünstigem Aufbau einerseits und sehr guten Gebrauchseigenschaften andererseits dargestellt. Für die meisten Anwendungsfälle ist ein zweiter Tilgerkanal, der zusätzlich zum ersten schaltbaren Tilgerkanal ebenfalls schaltbar ist, nicht erforderlich.

Bei dem zuvor beschriebenen Hydrolager kann es vorgesehen sein, dass der zweite Tilgerkanal durch eine erste Membran aus elastisch nachgiebigem Werkstoff in zwei Teil-Tilgerkanäle unterteilt ist, dass die Teil-Tilgerkanäle durch die Membran dicht voneinander getrennt sind, dass der der Arbeitskammer axial zugewandte erste Teil-Tilgerkanal mit der Dämpfungsflüssigkeit gefüllt ist und der zweite Teil-Tilgerkanal mit Luft und dass der zweite Teil-Tilgerkanal durch eine Entlüftungsbohrung strömungsleitend mit der Atmosphäre verbunden ist. Dadurch, dass der zweite Teil-Tilgerkanal mit Luft gefüllt ist und Luft ein kompressibles Medium ist, sind die Gebrauchseigenschaften des Hydrolagers hinsichtlich der Tilgung von Schwingungen vierter und sechster Ordnung besonders gut, wobei die Gebrauchseigenschaften weiter verbessert werden, wenn innerhalb des zweiten Teil-Tilgerkanals stets Atmosphärendruck herrscht, beispielsweise dadurch, dass der zweite Teil-Tilgerkanal durch die Entlüftungsbohrung mit der Atmosphäre verbunden ist. Eine unerwünschte dynamische Verhärtung des Hydrolagers erfolgt durch die Anregung durch den Motor bei einer höheren als der Tilgerfrequenz. Dann beginnt das Tilgersystem infolge der Masseneffekte und Phasenlage die Anregung zu verstärken. Um dieses zu vermeiden, empfiehlt es sich, den Druck innerhalb der Lufkammer durch Öffnen oder Schließen so zu verändern, dass das Tilgungssystem infolge anderer Federraten von Membran und Luftkammer den kritischen Frequenzbereich verlässt.

Generell besteht jedoch auch die Möglichkeit, beide Tilgerkanäle nicht-schaltbar, das heißt passiv auszubilden. Eine solche, sehr einfache Ausgestaltung des Hydrolagers ist insbesondere dann sinnvoll, wenn die Anregung vergleichsweise gering ist und eine kostengünstige Lösung gefordert ist.

Bevorzugt ist die erste Membran als Rollbalg ausgebildet. Die mechanische Belastung der ersten Membran während der bestimmungsgemäßen Verwendung des Hydrolagers ist dadurch auf ein Minimum reduziert . Gebrauchsdauer verringernde Zug- /Schubspannungen, auf die elastomere Werkstoffe, aus denen die Membran bevorzugt besteht, empfindlich reagieren, werden dadurch vermieden. Eine Hin- und Herverlagerung der Membran in Richtung der eingeleiteten Schwingungen hat ausschließlich eine Walkbewegung des elastomeren Werkstoffs im Bereich des Rollbalgs zur Folge. Das erfindungsgemäße Hydrolager weist daher gleichbleibend gute Gebrauchseigenschaften während einer sehr langen Gebrauchsdauer auf.

Die Entlüftungsbohrung kann im Traglager angeordnet sein. Die Herstellung einer solchen Entlüftungsbohrung ist besonders einfach und insbesondere dann von Vorteil, wenn auch der zweite Tilgerkanal im Traglager angeordnet ist und sich im Wesentlichen in Richtung der eingeleiteten Schwingungen erstreckt. Der zweite Tilgerkanal und die Entlüftungsbohrung sind dann relativ ortsfest zueinander angeordnet, wodurch die Abstimmung des Hydrolagers auf die zu tilgenden Frequenzen vereinfacht wird.

Um diese möglichst günstigen Strömungseigenschaften zu erreichen, die eine gute Funktion des Hydrolagers sehr begünstigen, ist von Vorteil, wenn der erste Tilgerkanal im Zentrum der Trennwand angeordnet ist. Das Traglager, der zweite Tilgerkanal, der im Traglager angeordnet ist und der erste Tilgerkanal fluchten durch die koaxiale Anordnung. Die Tilgung von Schwingungen vierter oder sechster Ordnung erfolgt dadurch besonders effizient.

Der erste und der zweite Tilgerkanal können jeweils im Bereich der axial einander gegenüberliegenden stirnseitigen Begrenzungen der Arbeitskammer angeordnet sein und jeweils in die Arbeitskammer münden, wobei der zweite Tilgerkanal in Richtung der Arbeitskammer offen ist. Bei Einleitung der zu tilgenden Schwingungen in axialer Richtung ist eine solche Ausgestaltung von Vorteil.

Die Trennwand ist bevorzugt durch einen Düsenkäfig gebildet, umfassend eine obere und eine untere Düsenscheibe, wobei zwischen den Düsenscheiben eine gummielastische zweite Membran schwingfähig angeordnet ist. Die innerhalb des Düsenkäfigs angeordnete zweite Membran ist zur Isolierung höherfrequenter kleinamplitudiger Schwingungen vorgesehen. Derartige Schwingungen werden beispielsweise dadurch angeregt, dass der Motor bei hohen Drehzahlen läuft. Die kleinamplitudigen hochfrequenten Schwingungen werden in das Hydrolager eingeleitet und durch eine bewegliche zweite Membran isoliert.

Der Düsenkäfig kann außerdem einen Dämpfungskanal begrenzen, der die Arbeits- und die Ausgleichskammer strömungsleitend verbindet. Der Dämpfungskanal erstreckt sich bevorzugt außenumfangsseitig entlang des Düsenkäfigs. Durch die vergleichsweise große Länge und das große Flüssigkeitsvolumen, das der lange Dämpfungskanal umschließt, können tieffrequente großamplitudige Schwingungen, wie sie beispielsweise beim Überfahren von Bordsteinkanten entstehen, wirkungsvoll gedämpft werden.

Der erste Tilgerkanal kann durch einen Verschlussstopfen aus Dichtungswerkstoff verschließbar sein. Durch die Verwendung eines Verschlussstopfens aus Dichtungswerkstoff ist der Tilgerkanal während einer langen Gebrauchsdauer immer wieder zuverlässig verschließbar.

Der Verschlussstopfen kann einstückig und materialeinheitlich mit der die Ausgleichskammer auf der der Trennwand abgewandten Seite begrenzenden Abschlussmembran ausgebildet sein. Die Abschlussmembran ist bevorzugt als Rollbalg ausgebildet und geeignet, im Wesentlichen drucklos Dämpfungsflüssigkeit aufzunehmen, die während der bestimmungsgemäßen Verwendung des Hydrolagers von der Arbeitskammer in die Ausgleichskammer verdrängt wird.

### Kurzbeschreibung der Zeichnungen

Das erfindungsgemäße Hydrolager wird nachfolgend anhand der Figuren 1 bis 4 näher erläutert. Diese zeigen jeweils in schematischer Darstellung:
- Fig. 1: ein Ausführungsbeispiel eines erfindungsgemäßen Hydrolagers in längsgeschnittener Darstellung,
- Fig. 2: ein Traglager, ein Auflager und eine Tragfeder, durch die Traglager und Auflager miteinander verbunden sind, abweichend von Fig. 1 gestaltet,
- Fig. 3: das Hydrolager-Oberteil aus Fig. 2,
- Fig. 4: ein Diagramm, in dem die dynamische Federrate über der zu tilgenden Frequenz aufgetragen ist.

### Ausführung der Erfindung

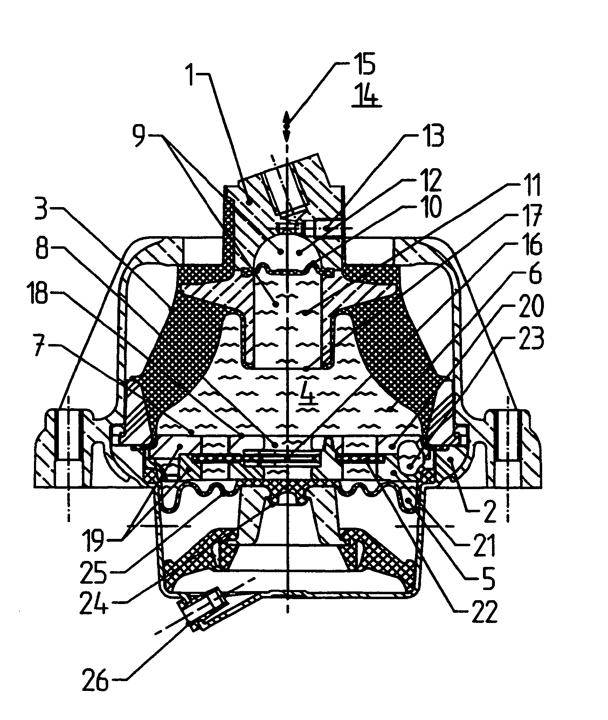

In Fig. 1 ist ein Ausführungsbeispiel eines erfindungsgemäßen Hydrolagers gezeigt. Das Hydrolager umfasst ein Traglager 1 und ein Auflager 2, die durch eine Tragfeder 3 aus elastomerem Werkstoff miteinander verbunden sind. Im Inneren des Hydrolagers befinden sich eine Arbeitskammer 4 und eine Ausgleichskammer 5, die jeweils mit Dämpfungsflüssigkeit 6 gefüllt sind, wobei die Arbeits- 4 und die Ausgleichskammer 5 auf ihren einander zugewandten Seiten durch die gemeinsame Trennwand 7 begrenzt sind. Die Trennwand 7 umfasst in dem hier gezeigten Ausführungsbeispiel nicht nur den ersten Tilgerkanal 8, der die Arbeitskammer 4 und die Ausgleichskammer 5 bedarfsweise strömungsleitend miteinander verbindet, sondern auch den Dämpfungskanal 23 zur Dämpfung tieffrequenter großamplitudiger Schwingungen und die zweite Membran 22, die zwischen der oberen 20 und der unteren Düsenscheibe 21 schwingfähig angeordnet ist, wobei die beiden Düsenscheiben 20, 21 den Düsenkäfig 19 bilden. Die zweite Membran 22 ist zur Isolierung höherfrequenter kleinamplitudiger Schwingungen in Richtung der eingeleiteten Schwingungen 15 hin- und herbewegbar.

Dem ersten Tilgerkanal 8 ist der zweite Tilgerkanal 9 in einer funktionstechnischen Parallelschaltung zugeordnet, wobei im hier gezeigten Ausführungsbeispiel der erste Tilgerkanal 8 schaltbar und der zweite Tilgerkanal nicht-schaltbar, d.h. passiv ausgebildet ist. Die beiden Tilgerkanäle 8, 9 sind jeweils als Tilgersystem zu verstehen.

### Zur Funktion des Hydrolagers wird folgendens ausgeführt:

Das dargestellte Lager ist so eingestellt, dass das Tilgersystem mit dem ersten Tilgerkanal 8 in der unteren Begrenzung 18 eine Tilgung bei einer vergleichsweise niedrigen Frequenz 27 bewirkt, während das Tilgersystem mit dem zweiten Tilgerkanal 9 bei einer höheren Frequenz 28 wirkt.

Der zweite Tilgerkanal 9 ist im Traglager 1 angeordnet und erstreckt sich im Wesentlichen in Richtung der eingeleiteten Schwingungen. Der erste 8 und der zweite Tilgerkanal 9 sind koaxial, mit axialem Abstand zueinander benachbart angeordnet, so dass zur Tilgung von Schwingungen zweiter und dritter sowie vierter und sechster Ordnung, wenn beide Tilgerkanäle, 8, 9 geöffnet sind, die innerhalb der Tilgerkanäle 8, 9 angeordneten Flüssigkeitsvolumina hin- und her schwingen und zwar gleichphasig zu den Leerlaufschwingungen einer abgestützen Verbrennungskraftmaschine.

Der Verschlussstopfen 24, mit dem der erste Tilgerkanal 8 verschlossen werden kann, ist in dem hier gezeigten Ausführungsbeispiel einstückig und materialeinheitlich mit der Abschlussmembran 25 ausgebildet, die die Ausgleichskammer 5 auf der der Trennwand 7 axial abgewandten Seite begrenzt. Sowohl der Verschlussstopfen 24 als auch die Abschlussmembran 25 bestehen aus einem elastomeren Werkstoff.

Die Betätigung des Verschlussstopfens 24 erfolgt in dem hier gezeigten Ausführungsbeispiel mittels Differenzdruck. Der Anschluss für die Luftleitung ist mit 26 bezeichnet. Im dargestellten Beispiel wird durch einen Unterdruck der Verschlußstopfen 24 vom ersten Tilgerkanal 8 wegbewegt.

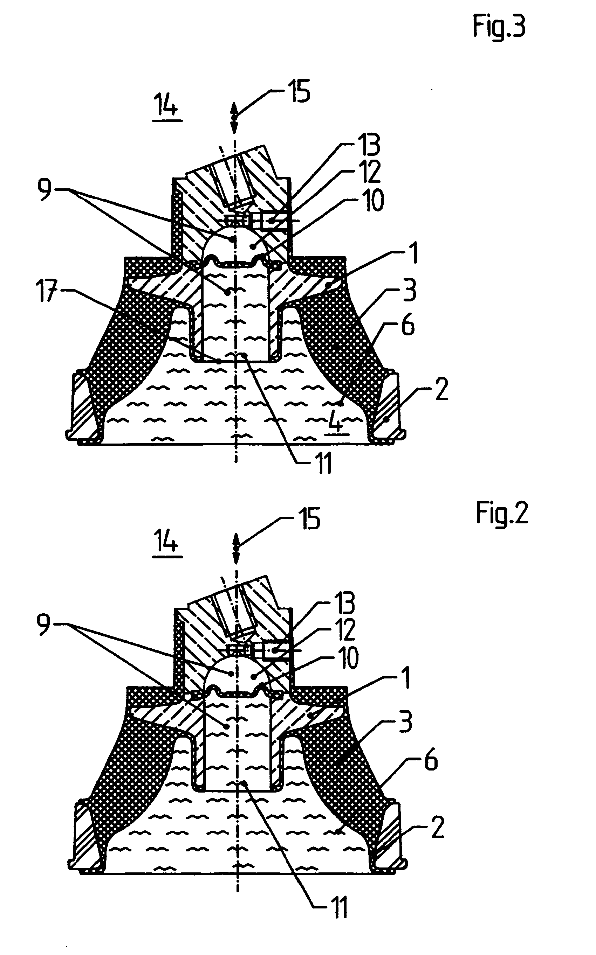

In den Figuren 2 und 3 ist ein Oberteil eines Hydrolagers dargestellt. Das dargestellt Oberteil umfasst in den Figuren 2 und 3 das Traglager 1 und das Auflager 2, die durch die Tragfeder 3 aus elastomerem Werkstoff miteinander verbunden sind. Sowohl der zweite Tilgerkanal 9 als auch die Entlüftungsbohrung 13 sind innerhalb des Traglagers 1 angeordnet und dadurch, unabhängig vom Betriebszustand des Hydrolagers, stets optimal zueinander positioniert.

Der zweite Tilgerkanal 9 ist durch die erste Membran 10, die aus einem elastisch nachgiebigen Werkstoff besteht, in zwei Teil-Tilgerkanäle 11, 12 unterteilt. Die Membran 10 ist dicht innerhalb des zweiten Tilgerkanals angeordnet. Der der Arbeitskammer 4 axial zugewandte erste Teil-Tilgerkanal 11 ist mit der Dämpfungsflüssigkeit 6 aus der Arbeitskammer 4 gefüllt, und der zweite Teil-Tilgerkanal 12 ist mit Luft gefüllt, wobei der zweite Teil-Tilgerkanal 12 durch die Entlüftungsbohrung 13 mit der Atmosphäre 14 verbunden werden kann. Die erste Membran 10 ist als Rollbalg ausgebildet.

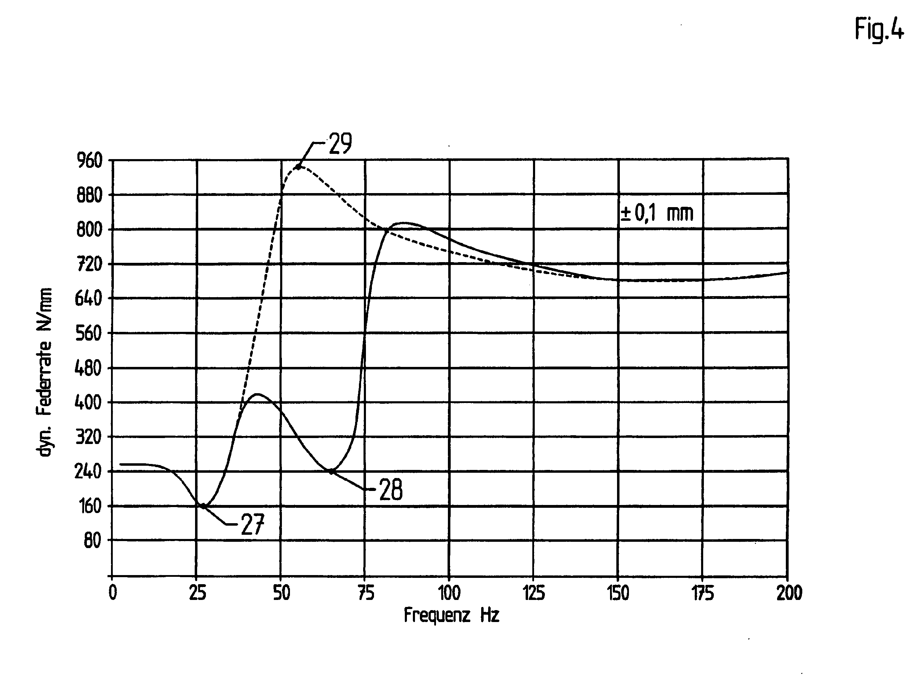

In Fig. 4 ist die Funktion des erfindungsgemäßen Hydrolagers als dynamische Federrate über der Frequenz aufgetragen. 27 zeigt die erste Absenkung der dynamischen Federrate, die durch die Funktion des ersten Tilgerkanals 8 bedingt ist. Mit zunehmender Frequenz steigt die dynamische Federrate nach Punkt 27 wieder an, wobei sich durch die Parallelschaltung des zweiten Tilgerkanals 9 die zweite Absenkung 28 ergibt.

Wäre ein zweiter Tilgerkanal 9 nicht vorhanden und das Hydrolager würde ausschließlich über einen ersten Tilgerkanal 8 verfügen, würde die Kurve, ausgehend von Punkt 27, zum Peak 29 laufen, wie gestrichelt dargestellt.

## Patentansprüche

1. Hydrolager, umfassend ein Traglager (1) und ein Auflager (2), die durch eine Tragfeder (3) aus gummielastischem Werkstoff miteinander verbunden sind und eine Arbeits- (4) und eine Ausgleichskammer (5) begrenzen, die mit Dämpfungsflüssigkeit (6) gefüllt sind, wobei die Arbeits-(4) und die Ausgleichskammer(5) auf ihren einander zugewandten Seiten durch eine gemeinsame Trennwand (7) voneinander getrennt und durch einen ersten Tilgerkanal (8) strömungsleitend miteinander verbunden sind, **dadurch gekennzeichnet, dass** dem ersten Tilgerkanal (8) ein zweiter Tilgerkanal (9) in einer funktionstechnischen Parallelschaltung zugeordnet ist, wobei der erste (8) und der zweite Tilgerkanal (9) koaxial, mit axialem Abstand zueinander benachbart angeordnet sind und wobei das Volumen des ersten Tilgerkanals (8) größer als das Volumen des zweiten Tilgerkanals (9) ist.

2. Hydrolager nach Anspruch 1, **dadurch gekennzeichnet, dass** der erste (8) und / oder der zweite Tilgerkanal (9) schaltbar ausgebildet sind.

3. Hydrolager nach einem der Ansprüche 1 oder 2, **dadurch gekennzeichnet, dass** der erste Tilgerkanal (8) schaltbar und der zweite Tilgerkanal (9) nicht-schaltbar, das heißt passiv ausgebildet ist.

4. Hydrolager nach Anspruch 1, **dadurch gekennzeichnet, dass** der erste Tilgerkanal (8) und der zweite Tilgerkanal (9) jeweils nicht-schaltbar, das heißt passiv ausgebildet sind.

5. Hydrolager nach einem der Ansprüche 1 bis 4, **dadurch gekennzeichnet, dass** der zweite Tilgerkanal (9) durch eine erste Membran (10) aus elastisch nachgiebigem Werkstoff in zwei Teil-Tilgerkanäle (11, 12) unterteilt ist, dass die Teil-Tilgerkanäle (11, 12) durch die Membran (10) dicht voneinander getrennt sind, dass der der Arbeitskammer (4) axial zugewandte erste Teil-Tilgerkanal (11) mit der Dämpfungsflüssigkeit (6) gefüllt ist und der zweite Teil-Tilgerkanal (12) mit Luft und dass der zweite Teil-Tilgerkanal (12) durch eine Entlüftungsbohrung (13) strömungsleitend mit der Atmosphäre (14) verbunden ist.

6. Hydrolager nach Anspruch 5, **dadurch gekennzeichnet, dass** die erste Membran (10) als Rollbalg ausgebildet ist.

7. Hydrolager nach Anspruch 5, **dadurch gekennzeichnet, dass** die Entlüftungsbohrung (13) im Traglager (1) angeordnet ist.

8. Hydrolager nach Anspruch 5, **dadurch gekennzeichnet, dass** der zweite Tilgerkanal (9) eine geschlossene Luftkammer ist.

9. Hydrolager nach einem der Ansprüche 1 bis 8, **dadurch gekennzeichnet, dass** der zweite Tilgerkanal (9) im Traglager (1) angeordnet ist und sich im Wesentlichen in Richtung der eingeleiteten Schwingungen (15) erstreckt.

10. Hydrolager nach einem der Ansprüche 1 bis 9, **dadurch gekennzeichnet, dass** der erste Tilgerkanal (8) im Zentrum (16) der Trennwand (7) angeordnet ist.

11. Hydrolager nach einem der Ansprüche 1 bis 10, **dadurch gekennzeichnet, dass** der erste (8) und der zweite Tilgerkanal (9) jeweils im Bereich der axial einander gegenüberliegenden stirnseitigen Begrenzungen (17, 18) der Arbeitskammer (4) angeordnet sind und jeweils in die Arbeitskammer (4) münden.

12. Hydrolager nach einem der Ansprüche 1 bis 11, **dadurch gekennzeichnet, dass** der zweite Tilgerkanal (9) in Richtung der Arbeitskammer (4) offen ist.

13. Hydrolager nach einem der Ansprüche 1 bis 12, **dadurch gekennzeichnet, dass** die Trennwand (7) durch einen Düsenkäfig (19) gebildet ist, umfassend eine obere (20) und eine untere Düsenscheibe (21), wobei zwischen den Düsenscheiben (20, 21) eine gummielastische zweite Membran (22) schwingfähig angeordnet ist.

14. Hydrolager nach Anspruch 13, **dadurch gekennzeichnet, dass** der Düsenkäfig (19) einen Dämfpungskanal (23) begrenzt, der die Arbeits- (4) und die Ausgleichskammer (5) strömungsleitend verbindet.

15. Hydrolager nach einem der Ansprüche 1 bis 14, **dadurch gekennzeichnet, dass** der erste Tilgerkanal (8) durch einen Verschlußstopfen (24) aus Dichtungswerkstoff verschließbar ist.

16. Hydrolager nach Anspruch 15, **dadurch gekennzeichnet, dass** der Verschlußstopfen (24) einstückig und materialeinheitlich mit der die Ausgleichskammer (15) auf der der Trennwand (7) abgewandten Seite begrenzenden Abschlußmembran (25) ausgebildet ist.

## Claims

1. Hydraulic support, comprising a supporting bearing (1) and a support (2), which are connected to each other by a supporting spring (3) of elastomeric material and delimit a working chamber (4) and a compensating chamber (5), which chambers are filled with damping fluid (6), wherein the working chamber (4) and the compensating chamber (5) are separated from each other on their mutually facing sides by a common partition (7) and are connected to each other in a flow-conducting manner by a first absorbing passage (8), the first absorbing passage (8) being assigned a second absorbing passage (9) in a functional parallel connection, wherein the first absorbing passage (8) and the second absorbing passage (9) are arranged coaxially adjacent at an axial distance from each other, and wherein the volume of the first absorbing passage (8) is greater than the volume of the second absorbing passage (9).

2. Hydraulic support according to Claim 1, **characterized in that** the first absorbing passage (8) and/or the second absorbing passage (9) is/are of switchable design.

3. Hydraulic support according to either of Claims 1 and 2, **characterized in that** the first absorbing passage (8) is of switchable design and the second absorbing passage (9) is of non-switchable design, i.e. is of passive design.

4. Hydraulic support according to Claim 1, **characterized in that** the first absorbing passage (8) and the second absorbing passage (9) are each of non-switchable design, i.e. are of passive design.

5. Hydraulic support according to one of Claims 1 to 4, **characterized in that** the second absorbing passage (9) is divided by a first membrane (10) of elastically flexible material into two partial absorbing passages (11, 12), **in that** the partial absorbing passages (11, 12) are separated tightly from each other by the membrane (10), **in that** the first partial absorbing passage (11), which faces the working chamber (4) axially, is filled with the damping fluid (6) and the second partial absorbing passage (12) is filled with air, and **in that** the second partial absorbing passage (12) is connected in a flow-conducting manner to the atmosphere (14) by a venting bore (13).

6. Hydraulic support according to Claim 5, **characterized in that** the first membrane (10) is designed as a rolling bellows.

7. Hydraulic support according to Claim 5, **characterized in that** the venting bore (13) is arranged in the supporting bearing (1).

8. Hydraulic support according to Claim 5, **characterized in that** the second absorbing passage (9) is a closed air chamber.

9. Hydraulic support according to one of Claims 1 to 8, **characterized in that** the second absorbing passage (9) is arranged in the supporting bearing (1) and extends essentially in the direction of the vibrations (15) introduced.

10. Hydraulic support according to one of Claims 1 to 9, **characterized in that** the first absorbing passage (8) is arranged in the centre (16) of the partition (7).

11. Hydraulic support according to one of Claims 1 to 10, **characterized in that** the first absorbing passage (8) and the second absorbing passage (9) are each arranged in the region of the axially mutually opposite, end-side delimitations (17, 18) of the working chamber (4) and each open into the working chamber (4).

12. Hydraulic support according to one of Claims 1 to 11, **characterized in that** the second absorbing passage (9) is open in the direction of the working chamber (4). ,

13. Hydraulic support according to one of Claims 1 to 12, **characterized in that** the partition (7) is formed by a nozzle cage (19), comprising an upper nozzle disc (20) and a lower nozzle disc (21), with an elastomeric, second membrane (22) being arranged between the nozzle discs (20, 21) in a manner such that it has the ability to vibrate.

14. Hydraulic support according to Claim 13, **characterized in that** the nozzle cage (19) delimits a damping passage (23) which connects the working chamber (4) and the compensating chamber (5) in a flow-conducting manner.

15. Hydraulic support according to one of Claims 1 to 14, **characterized in that** the first absorbing passage (8) can be closed by a closure stopper (24) of sealing material.

16. Hydraulic support according to Claim 15, **characterized in that** the closure stopper (24) is designed as a single piece with and of the same material as the closure membrane (25) delimiting the compensating chamber (5) on the side facing away from the partition (7).

## Revendications

1. Support hydraulique comportant un appui (1) et un support (2) reliés ensemble au moyen d'un ressort porteur (3) en un matériau caoutchouc élastique et délimitant une chambre de travail (4) et une chambre de compensation (5) remplies de liquide amortisseur (6), la chambre de travail (4) et la chambre de compensation (5) étant séparées l'une de l'autre, sur leurs côtés se faisant face, par une cloison commune (7) et étant reliées en écoulement entre elles par un premier canal d'atténuation (8), **caractérisé en ce qu'**un second canal d'atténuation (9) est adjoint au premier canal d'atténuation (8), avec un branchement parallèle du point de vue de la technique du fonctionnement, les premier (8) et second (9) canaux d'atténuation étant disposés de manière coaxiale, à une distance axiale l'un de l'autre, et le volume du premier canal d'atténuation (8) étant supérieur au volume du second canal d'atténuation (9).

2. Support hydraulique selon la revendication 1, **caractérisé en ce que** le premier canal d'atténuation (8) et/ou le second canal d'atténuation (9) sont réalisés de manière commutable.

3. Support hydraulique selon la revendication 1 ou 2, **caractérisé en ce que** le premier canal d'atténuation (8) est réalisé de manière commutable et le second canal d'atténuation (9) est réalisé de manière non commutable, c'est-à-dire qu'il est passif.

4. Support hydraulique selon la revendication 1, **caractérisé en ce que** le premier canal d'atténuation (8) et le second canal d'atténuation (9) sont réalisés tous deux de manière non commutable, c'est-à-dire qu'ils sont passifs.

5. Support hydraulique selon l'une des revendications 1 à 4, **caractérisé en ce que** le second canal d'atténuation (9) est subdivisé en deux canaux d'atténuation partiels (11, 12) au moyen d'une première membrane (10) en un matériau élastique souple, **en ce que** les canaux d'atténuation partiels (11, 12) sont séparés l'un de l'autre de manière étanche par la membrane (10), **en ce que** le premier canal d'atténuation partiel (11), orienté axialement en direction de la chambre de travail (4), est rempli de liquide amortisseur (6) et le second canal d'atténuation partiel (12) est rempli d'air, et **en ce que** le second canal d'atténuation partiel (12) est relié en écoulement à l'atmosphère (14) au moyen d'un perçage de mise à l'air (13).

6. Support hydraulique selon la revendication 5, **caractérisé en ce que** la première membrane (10) est réalisée sous la forme d'un soufflet ondulé.

7. Support hydraulique selon la revendication 5, **caractérisé en ce que** le perçage de mise à l'air (13) est disposé dans l'appui (1).

8. Support hydraulique selon la revendication 5, **caractérisé en ce que** le second canal d'atténuation (9) est une chambre d'air fermée.

9. Support hydraulique selon l'une des revendications 1 à 8, **caractérisé en ce que** le second canal d'atténuation (9) est disposé dans l'appui (1) et s'étend sensiblement dans la direction des oscillations induites (15).

10. Support hydraulique selon l'une des revendications 1 à 9, **caractérisé en ce que** le premier canal d'atténuation (8) est disposé au centre (16) de la cloison (7).

11. Support hydraulique selon l'une des revendications 1 à 10, **caractérisé en ce que** les premier (8) et second (9) canaux d'atténuation sont tous deux disposés dans la zone des délimitations (17, 18) frontales de la chambre de travail (4) se faisant face mutuellement de manière axiale et débouchent tous deux dans la chambre de travail (4).

12. Support hydraulique selon l'une des revendications 1 à 11, **caractérisé en ce que** le second canal d'atténuation (9) est ouvert en direction de la chambre de travail (4).

13. Support hydraulique selon l'une des revendications 1 à 12, **caractérisé en ce que** la cloison (7) est formée au moyen d'une cage à buses (19) comprenant une plaque à buses supérieure (20) et une plaque à buses inférieure (21), une seconde membrane (22) en caoutchouc élastique étant disposée de manière à pouvoir osciller entre les plaques à buses (20, 21).

14. Support hydraulique selon la revendication 13, **caractérisé en ce que** la cage à buses (19) délimite un canal d'amortissement (23) qui relie en écoulement la chambre de travail (4) et la chambre de compensation (5).

15. Support hydraulique selon l'une des revendications 1 à 14, **caractérisé en ce que** le premier canal d'atténuation (8) peut être fermé au moyen d'un bouchon de fermeture (24) réalisé en un matériau d'étanchéité.

16. Support hydraulique selon la revendication 15, **caractérisé en ce que** le bouchon de fermeture (24) est réalisé d'un seul tenant avec le même matériau que la membrane de fermeture (25) délimitant la chambre de compensation (5) sur le côté opposé à la cloison (7).
